Europäisches Patentamt

European Patent Office

Office européen des brevets

⑩

(11) Publication number: **0 226 557**
**B1**

# (12) EUROPEAN PATENT SPECIFICATION

(45) Date of publication of patent specification: **19.09.90**

(51) Int. Cl.⁵: **B 60 N 2/08**

(21) Application number: **86830381.9**

(22) Date of filing: **18.12.86**

(54) Seat for motor vehicles.

(30) Priority: **19.12.85 IT 6807885**

(43) Date of publication of application:
**24.06.87 Bulletin 87/26**

(45) Publication of the grant of the patent:
**19.09.90 Bulletin 90/38**

(84) Designated Contracting States:
**DE ES FR GB SE**

(56) References cited:
**EP-A-0 037 726**
**CA-A- 878 286**
**FR-A- 676 274**
**FR-A- 843 760**
**FR-A-1 448 282**
**FR-A-2 117 073**
**FR-A-2 523 526**
**FR-A-2 548 982**
**US-A-1 744 666**
**US-A-2 625 205**
**US-A-2 712 346**

(73) Proprietor: **FIAT AUTO S.p.A.**
**Corso Giovanni Agnelli 200**
**I-10135 Torino (IT)**

(72) Inventor: **Dal Monte, Antonio**
**Piazza Apollodoro 26**
**I-00196 Roma (IT)**

(74) Representative: **Bosotti, Luciano et al**
**c/o Jacobacci-Casetta & Perani S.p.A. Via Alfieri,**
**17**
**I-10121 Torino (IT)**

Courier Press, Leamington Spa, England.

## Description

The present invention relates to a motor vehicle seat, that is, a seat comprising a sitting plane and a back and intended to be fixed to the floor of the passenger compartment of a motor vehicle.

Known motor vehicle seats are dictated by very different structural and geometric typologies and are provided with adjustment devices which enable the overall attitude and longitudinal position of the seat within the motor vehicle to be varied, so as to adapt it to the anthropometric characteristics and/or driving or travelling tastes of the occupants of the motor vehicle.

The seats mounted in motor vehicles in current production, however, have considerable structural complexity and this has an adverse effect on the cost of the seat and consequently on the overall cost of the motor vehicle.

More specifically, the present invention relates to a seat for motor vehicles as set forth in the precharacterising portions of Claims 1, 4 and 6 which is known, for instance, from FR—A—676 274. Also FR—A—843 760 is of interest for the art of such seats.

The main objects of the present invention are to provide a seat which is structurally simple and which, while allowing extreme simplification of the manufacturing and assembly process and consequent reduction in the production costs, preserves the characteristics of adaptability of attitude and longitudinal position within the motor vehicle, and also allows the seat itself to be removed easily from the passenger compartment of the motor vehicle.

The possible removal of the seat from the motor vehicle, as well as facilitating maintenance of the passenger compartment, facilitates transport of bulky objects within the motor vehicle and also allows the use of the seat outside the vehicle, for example, for activities such as camping, etc.

According to the present invention, these objects are achieved by a seat having the further characteristics set forth in Claims 1, 4 and 6.

Preferably, the frame includes an upper portion defining the back of the seat, which has a general portal-like configuration and extends so as to connect the ends of the upper arms of the lower portions of the two opposite sides to the respective loop parts.

The invention will now be described, purely by way of non-limiting example, with reference to the appended drawings, in which:

Figure 1 is a perspective view showing a motor vehicle seat according to the invention in its final assembled condition,

Figure 2 illustrates the structure of the frame of the seat of Figure 1,

Figures 3 to 5 illustrate diagrammatically the elements used for fixing the seat of the invention to the floor of the passenger compartment of a motor vehicle,

Figures 6 and 7 illustrates diagrammatically the criteria by which the position and attitude of the seat of the invention are adjusted,

Figures 8 to 10 illustrate the structure of several adjustment members used for varying the attitude of the seat of the invention,

Figures 11 and 12 illustrate a possible variant of these adjustment members,

Figure 13 illustrates a further variant of these adjustment members, and

Figure 14 is a view taken on arrow XIV of Figure 13.

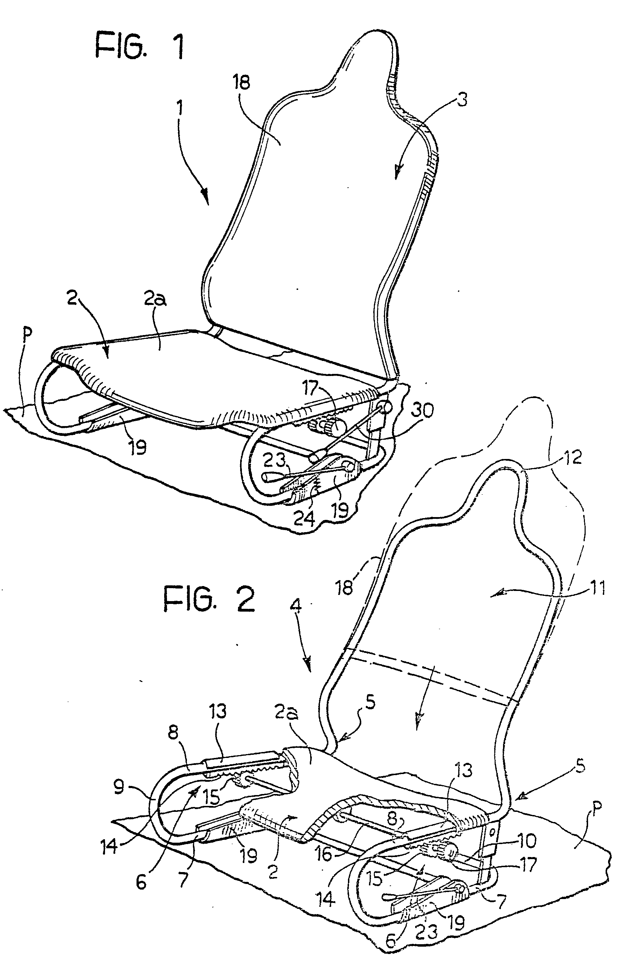

In Figure 1 a seat intended to be fixed to the floor P of the passenger compartment of a motor vehicle (not illustrated in its entirety) is indicated 1.

The seat 1 can be seen to include, in general terms, a sitting plane 2 and a back 3.

The frame of the seat 1 is indicated 4 and its structure is shown in Figure 2 after the removal of the sitting plane 2 and the upholstery of the back 3.

The frame 4 is constituted by a continuous, resilient tubular body (for example, of steel tubing) shaped so as to define two sides 5 of the seat which are substantially identical to and alongside each other.

Each side 5 can be seen to include a generally U-shaped lower portion which, when the seat 1 is mounted in the motor vehicle, is open towards the rear of the vehicle itself.

This U-shape can then be seen to include a lower arm 7 for resting on the floor P of the passenger compartment, an upper arm 8 for supporting the sitting plane 2, and a loop part 9 which is resiliently deformable and extends so as to connect the upper and lower arms 7 and 8.

The lower arms 7 of the sides 5 of the seat frame are connected at their ends facing the rear of the seat, by a tranverse lower arm 10.

The corresponding ends (that is, the ends opposite the loop parts 9) of the upper arms 8 are connected together by the upper part 11 of the frame, which has a general portal-like configuration and constitutes the support structure for the back 3 of the seat.

More particularly, at its upper end, the portal part 11 has a central loop 12 which extends upwardly to constitute the structure of the headrest of the seat.

In the currently preferred embodiment, the frame 4 is constituted by a single, continuous, shaped tubular body.

The frame of the seat according to the invention can thus be likened essentially to the support structure of the so-called "cantilevered seat" made at the end of the 1920's to the design of various designers (Stamm, Mies van der Rohe, Breuer).

The sitting plane 2 of the seat 1 is constituted by a structurally rigid support member slidable on two straight guides 13 fixed to the upper sides of the upper arms 8 of the sides 5 of the frame 4.

The term "structurally rigid" is intended to mean an element which, supported laterally by the upper arms 8 of the sides of the frame, is able to support the weight of the occupant of the seat 1. To advantage, however, this "structurally rigid" element may be provided with a padded cover 2a, at least on its upper face, in order to make the seat more comfortable.

The sliding of the seat member 2 on the guides 13 is controlled by a rack and pinion mechanism including, in the embodiment illustrated, two racks 14 fixed to the lower sides of the upper arms 8 of the frame 4 and a pair of pinions 15 mounted on support members (not explicitly shown in the drawings) fixed to the lower face of the seat member 2 and connected together by a shaft 16 which extends transverse the seat beneath the seat member 2. The shaft 16 may be rotated, causing the pinion 15 to rotate and the seat member 2 to move longitudinally relative to the motor vehicle, by means of a handle or knob 17 which projects from the seat member 2 at one side of the seat 1.

Naturally, the rack and pinion mechanism which controls the movement of the seat 2 has associated locking members (not illustrated) which enable the seat member 2 to be locked securely relative to the frame 4 so as to avoid its accidental movement, particularly during movement of the vehicle, as result of the forces exerted thereon by the occupant of the seat.

The upholstery of the back 3 is constituted essentially by an upholstered sack member 18 which may be fitted onto the upper part 11 of the frame 4 in the form of a cap, as shown schematically in broken outline in Figure 2.

Still with reference to this drawing, it can be seen that the upper part 11 of the frame 5, and particularly the sides thereof, have an anatomical-type profile with a lower portion extending towards the sitting plane 2 so as to ensure anatomically correct support for the lumbo-sacral region of the seat occupant.

This conformation of the back, and the possibility of independent adjustment of the longitudinal position of the sitting plane 2 to achieve anatomically correct support for the thighs of the seat occupant in any condition, gives the seat of the invention particularly appreciated anatomical characteristics which are not found in most of the motor vehicle seats in current production.

In order to fix the seat 1 of the invention to the floor P of the motor vehicle passenger compartment, two channel-shaped structural members 19 are provided which are mounted on the floor P (for example, by welding or by screws or bolts) in positions of alignment with the lower arms 7 of the frame 4 of the seat 1.

The fixing members 19, which are thus parallel and alongside each other, open upwardly and can therefore receive the lower arms 7 of the frame 4 within them for sliding movement.

By the sliding of the lower arms 7 of the frame 4 within the fixing members 19, it is thus possible to adjust the longitudinal position of the seat 1 within the passenger compartment of the motor vehicle.

Naturally, it is necessary, once a particular longitudinal position has been reached, to lock the seat 1 firmly to the floor P so that it cannot move accidentally during movement of the vehicle, for example, as a result of a sharp deceleration.

For this purpose, each fixing member 19 has an associated locking device constituted, in the example illustrated, by a rotary shaft 20 having (in correspondence with each member 19) a tooth or pin 21 which can engage one of a series of apertures or notches 22 provided on the upper sides of the lower arms 7 of the frame 4.

The rotation of the shaft 20, which extends transverse the seat 1 (in a configuration substantially similar to that of the shaft 16 described previously) immediately above the lower arms 7 of the frame 4, is driven by a lever 21 located on one side of the seat.

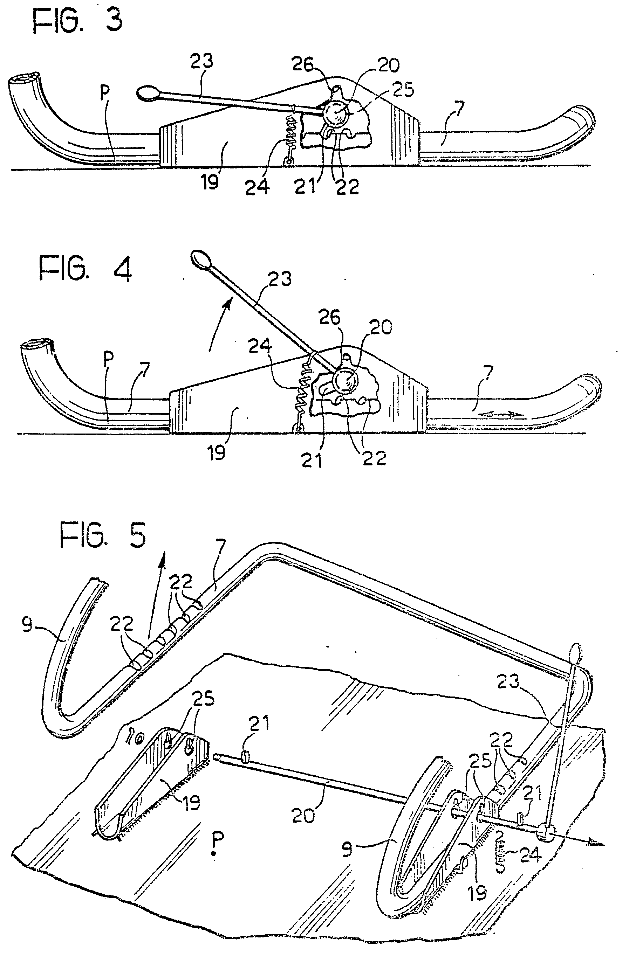

More particularly, when the lever 21 is in the lowered position illustrated in Figure 3, the pins 21 projecting from the shaft 20 engage two corresponding notches or apertures 22, preventing the lower arms 7 from sliding within the fixing members 19.

In these conditions, the seat 1 is firmly locked to the floor P of the passenger compartment.

When it is wished to vary the longitudinal position of the seat within the passenger compartment, the lever 21 is raised, as shown schematically in Figure 4, so as to disengage the pins 21 from the apertures 22.

In these conditions, the frame 4 of the seat can be made to slide freely forwardly or rearwardly until it reaches the desired position. When this has been reached, the lever 21 may be released and the lever 21 itself returned to the locking position of Figure 3 under the action of a biasing spring 24.

The shaft 20 is rotatable within apertures 25 formed in the side arms of the fixing members 19.

The periphery of the aperture 25 has an upwardly facing notch 26 which reproduces, in a complementary manner, the profile of the engagement teeth or pins 21 provided on the shaft 20.

Consequently, if the shaft 20 is rotated (by means of the lever 23) until the pins or teeth 21 are brought into a position of alignment with the notches 26 of the apertures 24, the assembly constituted by the shaft 20 and the lever 23 can be removed transversely from the fixing members 19, as shown schematically in Figure 5.

The removal of the shaft 20 from the fixing members 19 means that the lower arms 7 of the frame 4 can be removed from the fixing members 19 by an upward movement, as shown schematically by the arrow in Figure 5.

Thus, the seat 1 can be separated from the floor P and removed from the passenger compartment of the motor vehicle both to allow maintenance to be carried out and the seat to be used outside the motor vehicle, for example, for camping, etc.

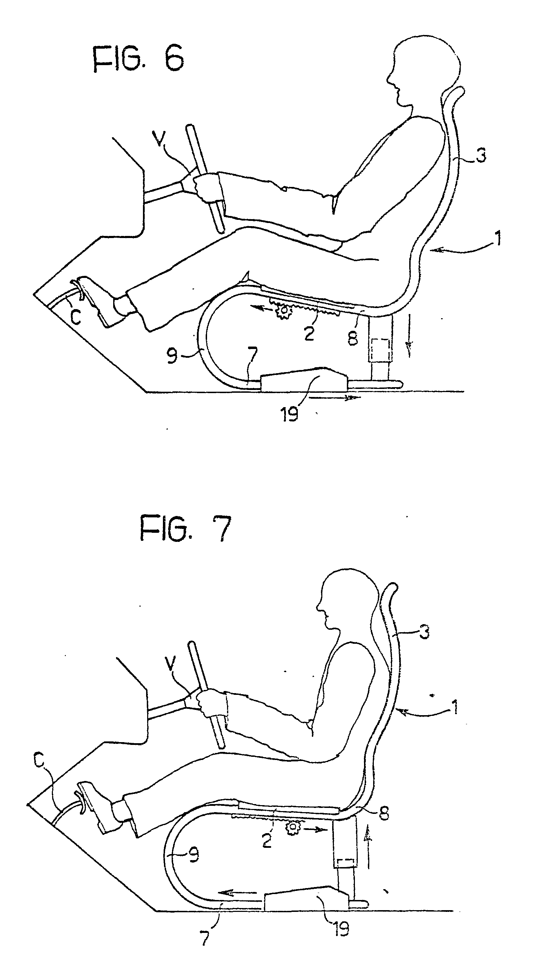

Figures 6 and 7 illustrate schematically how the overall attitude of the seat 1 of the invention may be adapted easily to the anthropometric characteristics and/or the driving or travelling habits of the seat occupants, in addition to the longitudinal position.

More particularly, Figure 6 makes reference to a tall driver while Figure 7 refers to a short driver.

For a tall driver or passenger (Figure 6), in addition to the need to move the seat away from the pedals C and the steering wheel V of the motor vehicle, there is also a need to incline the back 3 rearwardly so as to lower the rear part of the sitting plane 2 and avoid excessive raising of the point of vision.

On the other hand, for a short driver or passenger (Figure 7), in addition to the need to move the seat 1 closer to the pedals P and the steering wheel C, there is also a need to move the back 3 forwardly so as to raise the rear end of the sitting plane 2 and raise the point of vision.

In addition to this, in order to ensure correct support for the thighs and avoid, on the one hand, insufficient support and, on the other hand, the phenomenon generally defined as "raised limb", the tall driver or passenger (Figure 6) will be able to move the sitting plane 2 forwardly to increase the useful length thereof, while the shorter driver or passenger (Figure 7) will be able to move the sitting plane 2 closer to the back 3 to reduce the effective length of the sitting surface.

The variation in attitude (height of the rear end of the sitting plane 2 and inclination of the back 3) is adjusted in the seat 1 of the invention by the selective variation of the distance between the free ends (that is, the opposite ends to the loop parts 9) of the lower arms 7 and upper arms 8 of the sides 5 of the frame 4.

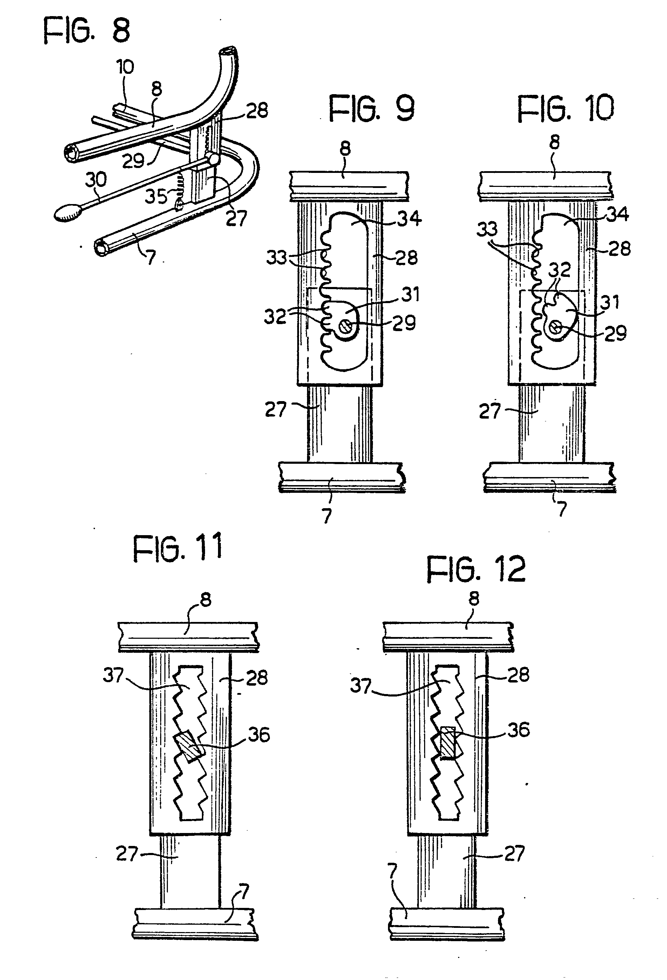

In a first solution, to which Figure 8 refers, the lower arms 7 and upper arms 8 of both sides 5 of the frame 4 are provided with complementary bracket parts 27, 28 which project generally vertically relative to one another.

The complementary parts 27 and 28 are provided respectively with a bolt and with a catch part which may be moved selectively into engagement so as to prevent relative movement of the upper and lower arms 8 and 7.

In practice, apart from the need to adjust the attitude of the seat, the requirement of selectively preventing the relative movement of the arms 7 and 8 is dictated by the need to prevent the rear part of the seat 1, which is supported in a cantilever manner by the loop parts 9, from starting to rock during movement. This rocking effect is in fact generally harmful to the correct driving of the vehicle.

Various possible ways of forming the bolts and catch parts on the parts 27 and 28 are possible and two of these are illustrated in Figures 9 and 10 and in Figures 11 and 12 respectively.

In the embodiment of Figures 9 and 10, the bracket parts 27 mounted on the lower arms 7 of the frame 4 support a rotatable shaft 29 (Figure 8) which extends horizontally beneath the lower end of the sitting plane 2 of the seat 1.

On the two ends of the shaft 29, which is rotatable by means of a lever 30 projecting from one side of the seat, are mounted two eccentric or cam bodies 31. These eccentric or cam bodies 31 have raised teeth 32 which can engage selectively in the notches or recesses 35 in one side of a vertical-axis slot 34 provided in each bracket part 28 extending downwardly from the corresponding upper arm 8 of the frame 4.

It is possible, by means of the lever 30, to orient the eccentrics or cams 31 between the position illustrated in Figure 9, in which the raised teeth 32 engage the notches 33 to prevent the relative sliding of the parts 27 and 28, and the position illustrated in Figure 10, in which the raised teeth 32 are disengaged from the notches 33 to allow relative sliding movement of the parts 27 and 28 in a vertical direction.

In the position illustrated in Figure 9, the parts 27 and 28, which are locked relative to each other, retain the lower arms 7 and upper arms 8 of the frame 4 in a fixed position. In these conditions, the frame 4 of the seat 1 is substantially rigid and the undesirable rocking cannot occur.

When it is wished to vary the attitude of the seat 1, the lever 30 is raised to as to rotate the cams or eccentrics 31 into the position of Figure 10. In these conditions the parts 27 and 28 are free to slide relative to each other. The relative position of the lower arms 7 and the upper arms 8 may thus be modified, varying the attitude of the seat.

One is dealing with an operation which can be carried out easily by the occupant of the seat.

More particularly, when it is desired to lower the rear end of the sitting plane 2 and incline the back 3 rearwardly, it will suffice for the occupant to bear on the back so as to cause the loop parts 9 to bend in the sense corresponding to the moving together of the rear ends of the lower arms 7 and 8.

When it is desired to raise the rear portion of the sitting plane 2 and bring the back 3 closer to the vertical position, however, it would be necessary to move the back of the back away. The resilient characteristics of the frame 4 in these conditions cause the raising of the upper arms 8 relative to the lower arms 7 and the consequent moving apart of the bracket parts 27 and 28.

Once the desired attitude has been reached, it will be possible to relock the lower arms 7 and upper arms 8 by the lever 30 and making it return the shaft 29 and the eccentrics or cams 31 mounted thereon into the locked position of Figure 9 under the action of the biasing spring 35 acting between the lever and the frame of the seat.

In the variant illustrated in Figures 11 and 12, the cams or eccentrics 31 mounted at the ends of the shaft 29 are replaced by a prismatic core 36 which cooperates with the longer sides of vertical-axis slots 37 provided in the upper parts 28.

The longer sides of the slots 37 have a sawtoothed profile complementary to the profile of the prismatic element 36.

Again in this case, it is possible, by means of the lever 30, to orient the shaft 29 and hence the prismatic cores 36 between a locking position illustrated in Figure 11, in which the prismatic core 36 is generally inclined to the longitudinal axis of the slot 37 and meshed with the lateral teeth of the slot 37 itself to prevent relative sliding of the parts 27 and 28, and a position of free movement, illustrated in Figure 12, in which the prismatic core 36 is aligned essentially with the longitudinal axis of the slot 37 and disengaged from the lateral teeth of the slot itself to allow relative sliding of the parts 27 and 28.

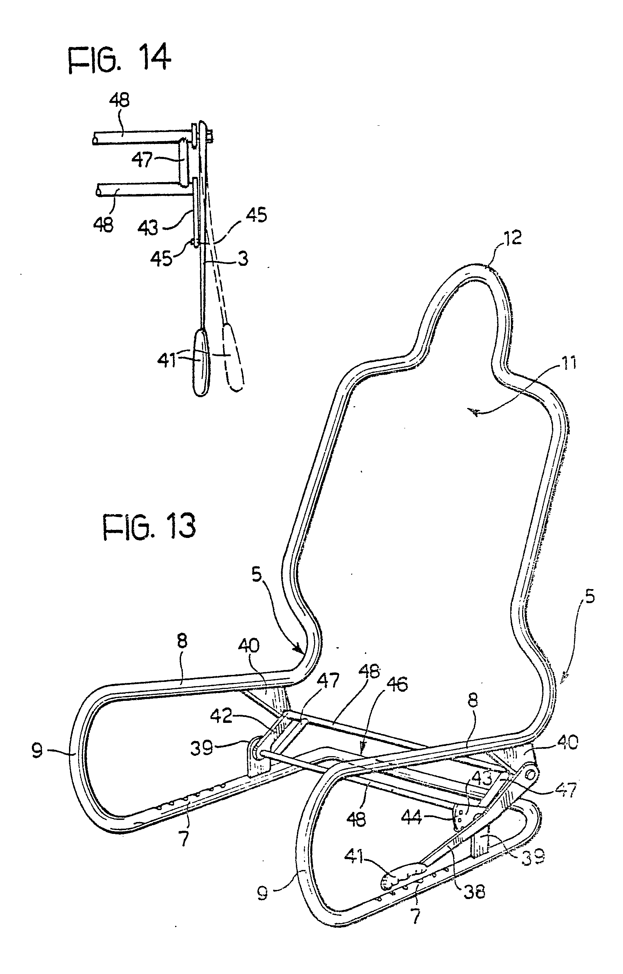

Figures 13 and 14 relate to another possible solution which enables the relative position of the lower arms 7 and upper arms 8 of the frame 4 to be varied selectively.

Again in this case, a pivotable lever 38 is used for the adjustment, this being mounted in a substantially identical position to the position of mounting of the pivotable lever 30 of Figure 8.

Again in this case, two complementary bracket parts 39 and 40 are mounted on the lower arms 7 and upper arms 8 of the frame 4.

The parts 39 and 40 differ from the vertically aligned bracket parts 27 and 28, however, in that they are staggered relative to each other.

More precisely, the bracket part 39 which is fixed to the upper side of the lower arm 7 is located in a position intermediate the loop part 9 and the bracket part 40 which is fixed to its lower side of the upper arm 8 in correspondence with the region of connection with the portal-like part 11 defining the frame of the back 3.

The lever 38 is hinged in an approximately median position to the bracket part 39 fixed to the lower arm 7 of one side 5 of the frame 4.

The lever 38 carries an operating knob 41 at one end and is hinged at its other end to the bracket part 40 which projects forwardly from the overlying upper arm 8.

A pivotable rod 42, corresponding to a sort of shortened replica of the lever 38, is hinged at its ends to the bracket parts 39 and 40 projecting from the lower arm 7 and upper arm 8 of the other side 5 of the frame 4.

Pivoting of the lever 38 thus causes lowering or raising of the bracket parts 40 relative to the lower bracket parts 39 which are fixed relative to the lower arms 7, so as to vary selectively the height of the lower portion of the sitting plane 2 and the inclination of the back 3.

In order to hold the lever 38 in its chosen position of adjustment, a locking device is provided which is constituted essentially by a plate 43 fixed to the bracket part 39 on which the lever 38 is pivoted. The plate 43 has a plurality of holes 44 disposed along a circular path.

The lever 38 has a pin or peg 45 which can be brought into a position of engagement with the hole 44 facing it at that moment so as to lock the lever 38 and prevent it from pivoting. The locking of the lever 38 against pivoting means that the lower arms 7 and upper arms 8 of the frame 4 are held firmly in the selected position of adjustment.

In order to vary the relative position of the lower arms 7 and the upper arms 8 during adjustment of the attitude of the seat 1, it is necessary to bring the lever 38 into a freely pivotable condition. For this purpose, the lever 38 may be formed so as to have characteristics of flexibility in a direction perpendicular to the plane in which the plate 43 lies.

Thus, the pin 45 may be disengaged selectively from the holes 44 by the bending of the lever, as shown schematically in broken outline in Figure 14.

Finally, a pivotable structural stiffening element, indicated 46, is constituted essentially by four rods 47 and 48 connected rigidly together. The two rods 47 are parallel to each other and extend beneath the sitting plane of the seat 1 alongside the portion of the lever 38 between the points of hinging to the bracket parts 39 and 40 and the pivotable rod 42, respectively.

The rods 47 rigidly interconnect the two rods 48 which are parallel to each other and extend horizontally beneath the sitting plane of the seat 1 to connect the hinge points of the lever 38 and the rod 42 to the lower bracket parts 39 and the upper bracket parts 40.

## Claims

1. Seat (1) comprising a sitting plane (2) and a back (3) and intended for fixing to the floor (P) of the passenger compartment of a motor vehicle, including a frame (4) constituted by a continuous, shaped tubular body which can be seen to include two substantially identical sides (5) alongside each other, each of which includes a substantially U-shaped lower portion (6) with a lower arm (7) for fixing to the floor (P) of the passenger compartment of the motor vehicle, and an upper arm (8) which supports the sitting plane (2) of the seat (1), and a deformable loop part (9) extending so as to connect the lower (7) and upper (8) arms, wherein two fixing members (19) are provided for fixing to the floor (P) of the passenger compartment of the motor vehicle in positions substantially co-extensive with the lower arms (7) of the sides (5) of the frame (4), each of which is generally channel-shaped and can receive one of the lower arms (7) slidingly within it, whereas removable locking means (20—24) are interposed between at least one of the fixing members (19) and the respective lower arm (7) of the side (5) of the frame (4) for retaining the seat (1) in a selectively predetermined position, characterised in that the locking means include an eccentric body (20, 21) mounted on the at least one fixing member (19) and movable selectively into a wedged position on the respective lower arm (7) of the side (5) of the frame (4).

2. Seat according to Claim 1, characterised in that the at least one fixing member (19) has an aperture (26) with a profile complementary to that of the eccentric body (20, 21) in an arrangement such that, in at least one predetermined angular position, the eccentric body (20, 21) may be removed from the at least one fixing member (19).

3. Seat (1) comprising a sitting plane (2) and a back (3) and intended for fixing to the floor (P) of the passenger compartment of a motor vehicle, including a frame (4) constituted by a continuous, shaped tubular body which can be seen to include two substantially identical sides (5) alongside each other, each of which includes a substantially U-shaped lower portion (6) with a lower arm (7) for fixing to the floor (P) of the passenger compartment of the motor vehicle, and an upper arm (8) which supports the sitting plane (2) of the seat (1), and a deformable loop part (9) extending so as to connect the lower (7) and upper (8) arms, characterised by means for adjusting the attitude of the seat (1), comprising two complementary bracket parts (27, 28) extending towards each other from the lower arm (7) and the upper arm (8), respectively, at at least one side (5) of the frame, each of the complementary bracket parts (27, 28) carrying respectively an associated bolt (31; 36) and associated catch parts (33; 37) selectively engageable to adjust the relative position of the bracket parts (27, 28).

4. Seat according to Claim 3, characterised in that the catch parts (33; 37) are constituted essentially by teeth, and in that the bolt (31; 36) comprises a profiled rotary body which can mesh with the teeth (33; 37).

5. Seat (1) comprising a sitting plane (2) and a back (3) and intended for fixing to the floor (P) of the passenger compartment of a motor vehicle, including a frame (4) constituted by a continuous, shaped tubular body which can be seen to include two substantially identical sides (5) alongside each other, each of which includes a substantially U-shaped lower portion (6) with a lower arm (7) for fixing to the floor (P) of the passenger compartment of the motor vehicle, and an upper arm (8) which supports the sitting plane (2) of the seat (1) and a deformable loop part (9) extending so as to connect the lower (7) and upper (8) arms, characterised by means for adjusting the attitude of the seat (1), comprising a pivotable lever (38) extending between the lower arm (7) and the upper arm (8) of at least one side (5) of the frame in an arrangement such that the pivoting of the lever (38) causes relative adjustment of the upper arm (8) with respect to the lower arm (7).

6. Seat according to Claim 5, characterised in that the frame (4) has associated stop mean (43) for stopping the movement of the pivotable lever (38) to retain the upper and lower arms (7, 8) in a selectively predetermined relative position.

7. Seat according to Claim 6, characterised in that the stop means comprise a plate member (43) having holes (44) disposed along a circular path, and in that the pivotable lever (38) has an engagement member (45) which moves along the path as a result of the pivoting of the lever (38) and can selectively engage one of the holes (44) in the plate member (43) to retain the pivotable lever (38) in a fixed angular position.

8. Seat according to Claim 7, characterised in that the pivotable lever (38) is flexible in a direction perpendicular to the plane of the circular movement in order to release the engagement member (45) from the holes (44) in the plate member.

9. Seat according to any one of Claims 6 to 8, characterised in that a stiffening member (47) is provided for the frame (4) and comprises two pivotable rods each extending so as to be pivotable between the lower arm (7) and the upper arm (8) and one of the sides (5) of the frame (4), and two transverse rods (48) each of which rigidly connects the homologous ends of the two pivotable levers (47).

10. Seat according to any one of the preceding Claims, characterised in that the frame (4) includes an upper portion (11) defining the back (3) of the seat, which has a general portal-like configuration and extends so as to connect the ends of the upper arms (8) of the two sides (5) opposite the respective loop parts (9).

11. Seat according to Claim 10, characterised in that the back (3) has upholstery (18) of a general sack-like configuration so that the upholstery (18) can be fitted onto the upper portion (11) of the frame (4) in the form of a cap.

12. Seat according to any one of the preceding Claims, characterised in that the frame is constituted by a single, continuous, resiliently flexible tubular body (4).

13. Seat according to any one of the preceding Claims, characterised in that the sitting plane (2) is constituted by a structurally rigid element (as previously defined) resting on the upper arms (8) of the two sides (5).

14. Seat according to Claim 13, characterised in that the structurally rigid element is movable selectively along the upper arms (8) so that the position of the sitting plane (2) can be adjusted independently of the position of the back (3) of the seat.

15. Seat according to Claim 14 characterised in that a rack and pinion mechanism (14—17) is interposed between the structurally rigid element (2) and the upper arms (8) for selective adjustment of the position in which the structurally rigid element (2) rests on the upper arms (8).

**Patentansprüche**

1. Sitz (1) mit einer Sitzfläche (2) und einer Rückenlehne (3) zur Befestigung auf dem Boden (P) des Fahrgastraums eines Kraftfahrzeugs, der einen Rahmen (4) besitzt, der aus einem durchgehenden, gebogenen rohrförmigen Körper besteht mit zwei im wesentlichen identisch ausgebildeten, nebeneinander liegenden Seiten (5) mit jeweils einem im wesentlichen U-förmigen unteren Teil (6), das einen unteren Arm (7) zur Befestigung an dem Boden (P) des Fahrgastraums des Kraftfahrzeugs und einen die Sitzfläche (2) des Sitzes (1) tragenden oberen Teil (7) und einen zwischen dem unteren Arm (7) und dem oberen Arm (8) verbindend erstreckenden verformbaren Bügelteil (9) aufweist, mit Befestigungselementen (19) zur Befestigung des Rahmens (4) auf dem Boden (P) des Fahrgastraums des Kraftfahrzeugs in Positionen, die im wesentlichen dem Verlauf der unteren Arme (7) der beiden Seiten (5) des Rahmens (4) entsprechen, wobei jedes dieser Befestigungselemente (19) im wesentlichen kanalartig ausgebildet ist und einen der unteren Arme (7) gleitend aufnehmen kann, wobei zwischen wenigstens einem der Befestigungselemente (19) und dem zugehörigen unteren Arm (7) der Seite (5) des Rahmens (4) lösbare Verriegelungsmittel (20—24) angeordnet sind, mittels derer der Sitz (1) in einer vorbestimmten ausgewählten Position gehalten werden kann, dadurch gekennzeichnet, daß die Verriegelungsmittel einen exzentrischen Körper (20, 21) umfassen, der an dem wenigstens einen Befestigungselement (19) montiert und selektiv in eine Klemmstellung auf dem betreffenden unteren Arm (7) der Seite (5) des Rahmens (4) bewegbar ist.

2. Sitz nach Anspruch 1, dadurch gekennzeichnet, daß das wenigstens eine Befestigungselement (19) eine Öffnung (26) aufweist, die ein zu dem Profil des exzentrischen Körpers (20, 21) komplementäres Profil besitzt und so angeordnet ist, daß der exzentrische Körper (20, 21) in wenigstens einer vorbestimmten Winkelstellung aus dem wenigstens einen Befestigungselement (19) lösbar ist.

3. Sitz (1) mit einer Sitzfläche (2) und einer Rückenlehne (3) zur Befestigung auf dem Boden (P) des Fahrgastraums eines Kraftfahrzeugs, der einen Rahmen (4) besitzt, der aus einem durchgehenden, gebogenen rohrförmigen Körper besteht mit zwei im wesentlichen identisch ausgebildeten, nebeneinander liegenden Seiten (5) mit jeweils einem im wesentlichen U-förmigen unteren Teil (6), das einen unteren Arm (7) zur Befestigung an dem Boden (P) des Fahrgastraums des Kraftfahrzeugs und einen die Sitzfläche (2) des Sitzes (1) tragenden oberen Teil (7) und einen den unteren Arm (7) und den oberen Arm (8) miteinander verbindenden verformbaren Bügelteil (9) aufweist, gekennzeichnet durch Mittel zur Höheneinstellung des Sitzes (1), mit zwei komplementären Stützteilen (27, 28), die sich von dem unteren Arm (7) bzw. von dem oberen Arm (8) an wenigstens einer Seite (5) des Rahmens aufeinander zu erstrecken, wobei jeder dieser komplementären Stützteile (27, 28) ein Riegelteil (31; 36) bzw. Fallenteile (33; 37) trägt, in die das Riegelteil zur Einstellung der relativen Position der Stützteile (27, 28) selektiv eingreifen kann.

4. Sitz nach Anspruch 3, dadurch gekennzeichnet, daß die Fallenteile (33; 37) im wesentlichen aus Zähnen bestehen und daß das Riegelteil (31; 36) einen profilierten drehbaren Körper aufweist, der mit den genannten Zähnen (33; 37) kämmen kann.

5. Sitz (1) mit einer Sitzfläche (2) und einer Rückenlehne (3) zur Befestigung auf dem Boden (P) des Fahrgastraums eines Kraftfahrzeugs, der einen Rahmen (4) besitzt, der aus einem durchgehenden, gebogenen rohrförmigen Körper besteht mit zwei im wesentlichen identisch ausgebildeten, nebeneinander liegenden Seiten (5) mit jeweils einem im wesentlichen U-förmigen unteren Teil (6), das einen unteren Arm (7) zur Befestigung an dem Boden (P) des Fahrgastraums des Kraftfahrzeugs und einen die Sitzfläche (2) des Sitzes (1) tragenden oberen Teil (8) und einen den unteren Arm (7) und den oberen Arm (8) miteinander verbindenden verformbaren Bügelteil (9) aufweist, gekennzeichnet durch Mittel zur Höheneinstellung des Sitzes (1), die einen schwenkbaren Hebel (38) umfassen, der sich auf wenigstens einer Seite (5) des Rahmens zwischen dem unteren Arm (7) und dem oberen Arm (8) erstreckt und so angeordnet ist, daß das Verschwenken des Hebels (38) eine Einstellung des oberen Arm (8) relativ zu dem unteren Arm (7) bewirkt.

6. Sitz nach Anspruch 5, dadurch gekennzeichnet, daß dem Rahmen (4) Arretiermittel (43) zur Begrenzung der Bewegung des schwenkbaren Hebels (38) zugeordnet sind, durch die der obere und der untere Arm (7, 8) in einer ausgewählten vorbestimmten Relativstellung fixierbar sind.

7. Sitz nach Anspruch 6, dadurch gekennzeichnet, daß die Arretiermittel eine Platte (43) mit längs einer kreisbogenförmigen Bahn angeordneten Löchern (44) umfassen und daß der schwenkbare Hebel (38) ein Eingriffsglied (45) aufweist, das sich beim Verschwenken des Hebels (38) entlang der genannten Bahn bewegt und wahlweise in eines der Löcher (44) der Platte (43) eingreifen kann, um den schwenkbaren Hebel (38) in einer festgelegten Winkelstellung zu halten.

8. Sitz nach Anspruch 7, dadurch gekennzeichnet, daß der schwenkbare Hebel (38) in Richtung senkrecht zur Ebene der kreisförmigen Bewegung flexibel ist, um das Eingriffsglied (45) aus den Löchern (44) der Platte herauszuführen.

9. Sitz nach einem der Ansprüche 6 bis 8, dadurch gekennzeichnet, daß ein Versteifungselement (47) zur Versteifung des Rahmens (4) vorgesehen ist mit zwei schwenkbaren Hebeln (47), die jeweils so angeordnet sind, daß sie zwischen dem unteren Arm (7) und dem oberen Arm (8) und einer der Seiten (5) des Rahmens (4) verschwenkbar sind, sowie zwei Querstäbe (48), deren jeder gleichnamige Ende der beiden schwenkbaren Hebel (47) starr miteinander verbindet.

10. Sitz nach einem der vorhergehenden Ansprüche, dadurch gekennzeichnet, daß der Rahmen (4) einen portalartig geformten, die Rückenlehne des Sitzes bildenden, oberen Teil (11) aufweist, der die den Bügelteilen (9) entgegengesetzten Enden der oberen Arme (8) der beiden Seiten (5) miteinander verbindet.

11. Sitz nach Anspruch 10, dadurch gekennzeichnet, daß die Rückenlehne (3) eine Polsterung (18) besitzt, die im wesentlichen sackartig ausgebildet ist, so daß sie auf den oberen Teil (11) des Rahmens (4) in Form einer Kappe aufgesetzt werden kann.

12. Sitz nach einem der vorhergehenden Ansprüche, dadurch gekennzeichnet, daß der Rahmen aus einem einzigen durchgehenden, elastisch verformbaren rohrförmigen Körper (4) besteht.

13. Sitz nach einem der vorhergehenden Ansprüche, dadurch gekennzeichnet, daß die Sitzfläche (2) aus einem strukturell formfesten Element (wie oben bestimmt) besteht, das auf den oberen Armen (8) der beiden Seiten (5) ruht.

14. Sitz nach Anspruch 13, dadurch gekennzeichnet, daß das strukturell formfeste Element längs der oberen Arme (8) selektiv so verschiebbar ist, daß die Position der Sitzfläche (2) unabhängig von der Position der Rückenlehne (3) des Sitzes eingestellt werden kann.

15. Sitz nach Anspruch 14, dadurch gekennzeichnet, daß zwischen dem strukturell formfesten Element (2) und den oberen Armen (8) ein Zahnstangen-Zahnrad-Mechanismus (14—17) angeordnet ist, mit dem die Position selektiv einstellbar ist, in der das strukturell formfeste Element (2) aus den oberen Armen (8) ruht.

## Revendications

1. Siège (1) qui comporte un plan d'assise (2) et un dossier (3) et est destiné à être fixé au plancher (P) du compartiment des passagers d'un véhicule à moteur, comprenant un cadre (4) constitué par un corps tubulaire continu de forme convenable qui peut être considéré comme comprenant deux côtés pratiquement identiques (5) placés le long l'un de l'autre, chacun comprenant une partie inférieure (6) pratiquement en U ayant une branche inférieure (7) destinée à la fixation au plancher (P) du compartiment des passagers du véhicule à moteur, et une branche supérieure (8) qui supporte le plan d'assise (2) du siège (1), et une partie (9) formant une boucle déformable disposée afin qu'elle raccorde les branches inférieures (7) et supérieures (8), deux organes (19) étant destinés à assurer la fixation au plancher (P) du compartiment des passagers du véhicule à moteur à des positions correspondant pratiquement à la longueur des branches inférieures (7) des côtés (5) du cadre (4), chaque oragne de fixation ayant une forme générale de canal et pouvant loger l'une des branches inférieures (7) afin qu'elle coulisse dans cet organe, alors qu'un dispositif (20—24) de blocage temporaire est placé entre l'un au moins des organes de fixation (19) et la branche inférieure respective (7) du côté (5) du cadre (4) afin que le siège (1) soit maintenu en position prédéterminée sélectivement, caractérisé en ce que le dispositif de blocage comporte un corps excentrique (20, 21) monté sur l'organe (19) de fixation au moins et mobile sélectivement vers une position de coincement sur la branche inférieure respective (7) du côté (5) du cadre (4).

2. Siège selon la revendication 1, caractérisé en ce que l'organe (19) de fixation au moins a une ouverture (26) dont le profil est complémentaire de celui du corps excentrique (20, 21), avec une disposition telle que, pour une position angulaire prédéterminée au moins, le corps excentrique (20, 21) peut être retiré de l'organe (19) de fixation au moins.

3. Siège (1) comprenant un plan d'assise (2) et un dossier (3), et destiné à être fixé au plancher (P) du compartiment des passagers d'un véhicule à moteur, le siège comprenant un cadre (4) constitué par un corps tubulaire continu de forme convenable qui peut être considéré comme comprenant deux côtés pratiquement identiques (5) placés le long l'un de l'autre, chacun comprenant une partie inférieure (6) pratiquement en U ayant une branche inférieure (7) de fixation au plancher (P) du compartiment des passagers du véhicule à moteur et une branche supérieure (8) qui supporte le plan d'assise (2) du siège (1), et une partie de boucle déformable (9) disposée afin qu'elle raccorde les branches inférieure (7) et supérieure (8), caractérisé par un dispositif de réglage de l'attitude du siège (1), comprenant deux parties complémentaires de support (27, 28) tournées l'une vers l'autre à partir de la branche inférieure (7) et de la branche supérieure (8) respectivement, d'un côté (5) au moins du cadre, chacune des parties complémentaires (27, 28) de support portant respectivement un organe associé de verrouillage (31; 36) et des parties d'accrochage associées (33; 37) qui peuvent coopérer sélectivement afin que la position relative des parties de support (27, 28) puisse être réglée.

4. Siège selon la revendication 3, caractérisé en ce que les parties d'accrochage (33; 37) sont constituées essentiellement par des dents, et en ce que l'organe de verrouillage (31; 36) comprend un corps rotatif profilé qui peut venir en prise avec les dents (33; 37).

5. Siège (1) comprenant un plan d'assise (2) et un dossier (3) et destiné à être fixé au plancher (P) du compartiment des passagers d'un véhicule à moteur, comprenant un cadre (4) constitué par un corps tubulaire continu de forme convenable qui peut être considéré comme comprenant deux côtés pratiquement identiques (5) placés le long l'un de l'autre, chacun d'eux comprenant une partie inférieure pratiquement en U (6) ayant une branche inférieure (7) de fixation au plancher (P) du compartiment des passagers du véhicule à moteur et une branche supérieure (8) qui supporte le plan d'assise (2) du siège (1), et une partie (9) formant une boucle déformable destinée à raccorder les branches inférieure (7) et supérieure (8), caractérisé par un dispositif de réglage de l'attitude du siège (1) qui comporte un levier pivotant (38) disposé entre la branche inférieure (7) et la branche supérieure (8) d'un côté (5) au moins du cadre, avec une disposition telle que le pivotement du levier (38) provoque un réglage relatif de la branche supérieure (8) par rapport à la branche inférieure (7).

6. Siège selon la revendication 5, caractérisé en ce que le cadre (4) comporte un dispositif associé (43) d'arrêt du déplacement du levier pivotant (38) destiné à retenir les branches supérieure et inférieure (7, 8) en position relative sélectivement prédéterminée.

7. Siège selon la revendication 6, caractérisé en ce que le dispositif d'arrêt comporte une plaque (43) ayant des trous (44) disposés suivant un trajet circulaire, et en ce que le levier pivotant (38) a un organe de coopération (45) qui se déplace suivant ledit trajet lors du pivotement du levier (38) et qui peut coopérer sélectivement avec l'un des trous (44) de la plaque (43) afin que le levier pivotant (38) soit maintenu avec une position angulaire fixe.

8. Siège selon la revendication 7, caractérisé en ce que le levier pivotant (38) est flexible en direction perpendiculaire au plan du déplacement circulaire afin que l'organe de coopération (45) puisse être séparé des trous (44) de la plaque.

9. Siège selon l'une quelconque des revendications 6 à 8, caractérisé en ce qu'un organe (47) de renforcement est associé au cadre (4) et comporte deux tiges pivotantes disposées chacune de manière qu'elle puisse pivoter entre la branche inférieure (7) et la branche supérieure (8) et l'un des côtés (5) du cadre (4), et deux tiges transversales (48) qui raccordent chacune rigidement les extrémités homologues des deux leviers pivotants (47).

10. Siège selon l'une quelconque des revendications précédentes, caractérisé en ce que le cadre (4) a une partie supérieure (11) délimitant le dossier (3) du siège, ayant une configuration générale en forme de portique et disposée de manière qu'elle relie les extrémités des branches supérieures (8) des deux côtés (5), du côté opposé aux parties respectives de boucle (9).

11. Siège selon la revendication 10, caractérisé en ce que le dossier (3) a une sellerie (18) ayant la forme générale d'un sac afin que la sellerie (18) puisse être placée sur la partie supérieure (11) du cadre (4) sous forme d'un capuchon.

12. Siège selon l'une quelconque des revendications précédentes, caractérisé en ce que le cadre est constitué par un corps tubulaire continu, unique et flexible (4).

13. Siège selon l'une quelconque des revendications précédentes, caractérisé en ce que le plan d'assise (2) est constitué par un élément de structure rigide (tel que défini précédemment) appuyé sur les branches supérieures (8) des deux côtés (5).

14. Siège selon la revendication 13, caractérisé en ce que l'élément de structure rigide est mobile sélectivement le long des branches supérieures (8) afin que la position du plan d'assise (2) puisse être réglé indépendamment de la position du dossier (3) du siège.

15. Siège selon la revendication 14, caractérisé en ce qu'un mécanisme à pignon et crémaillère (14—17) est placé entre l'élément (2) de structure rigide et les branches supérieures (8) afin que la position d'appui de l'élément de structure rigide (2) sur les branches supérieures (8) puisse être réglée sélectivement.

FIG. 1

FIG. 2

FIG. 3

FIG. 4

FIG. 5

2

## FIG. 6

## FIG. 7

## FIG. 8

## FIG. 9

## FIG. 10

## FIG. 11

## FIG. 12

4

FIG. 14

FIG. 13